(19) Europäisches Patentamt
European Patent Office
Office européen des brevets

(11) **EP 4 745 621 A1**

(12) **EUROPEAN PATENT APPLICATION**
published in accordance with Art. 153(4) EPC

(43) Date of publication:
**20.05.2026 Bulletin 2026/21**

(21) Application number: **24839630.1**

(22) Date of filing: **04.07.2024**

(51) International Patent Classification (IPC):
***G01S 7/4861*** (2020.01)     ***G01S 17/894*** (2020.01)

(52) Cooperative Patent Classification (CPC):
**G01S 7/4861; G01S 17/894**

(86) International application number:
**PCT/JP2024/024178**

(87) International publication number:
**WO 2025/013738 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.07.2023 JP 2023112997**

(71) Applicant: **JVCKenwood Corporation**
**Yokohama-shi, Kanagawa 2210022 (JP)**

(72) Inventor: **OKANOUE Kunihiro**
**Yokohama-shi Kanagawa 221-0022 (JP)**

(74) Representative: **Wagner & Geyer**
**Partnerschaft mbB**
**Patent- und Rechtsanwälte**
**Gewürzmühlstrasse 5**
**80538 München (DE)**

(54) **IMAGING DEVICE**

(57)     An imaging apparatus (10) includes: a light source (18) that irradiates a target object with a pulse light (28) repeatedly; a distance image sensor that measures an incident light (26) from the target object in synchronization with irradiation with the pulse light (28) and generates a distance image indicating a distance to the target object by using results of multiple measurements corresponding to multiple sessions of irradiation with the pulse light (28); and a control unit (20) that makes the number of times of measurements used to calculate the distance variable depending on an amount of the incident light.

FIG. 5A

SETTING VALUE 1
（F1.4）

| FRAME PERIOD Tf1 | FRAME PERIOD Tf1 | FRAME PERIOD Tf1 | FRAME PERIOD Tf1 |

MEASUREMENT Tm1 | READOUT Tr | MEASUREMENT Tm1 | READOUT Tr | MEASUREMENT Tm1 | READOUT Tr | MEASUREMENT Tm1 | READOUT Tr

DISTANCE CALCULATION

FIG. 5B

SETTING VALUE 2
（F2.0）

| FRAME PERIOD Tf2 | FRAME PERIOD Tf2 |

MEASUREMENT Tm2 (= Tm1 × 2) | READOUT Tr | MEASUREMENT Tm2 (= Tm1 × 2) | READOUT Tr | MEASUREMENT Tm2

DISTANCE CALCULATION

FIG. 5C

SETTING VALUE 3
（F2.8）

| FRAME PERIOD Tf3 |

MEASUREMENT Tm3 (= Tm1 × 4) | READOUT Tr | MEASUREMENT Tm3

DISTANCE CALCULATION

EP 4 745 621 A1

# Description

TECHNICAL FIELD

The present invention relates to an imaging apparatus.

BACKGROUND ART

A distance measurement sensor for measuring a distance to a target object by irradiating the target object with a pulse light and detecting a reflected light from the target object by a photodiode. For example, a method is known that transfers the charge generated by the photodiode to multiple charge storage nodes in synchronization with irradiation with the pulse light and calculates the distance to the target object by referring to the distribution ratio of the charge stored in the multiple charge storage nodes (see, for example, Patent literature 1).

RELATED-ART LITERATURE

PATENT LITERATURE

[Patent literature 1] JP 2004-294420 A

SUMMARY OF INVENTION

In the case a variable aperture is provided in the imaging optical system of a distance image sensor, changing the setting value of the variable aperture to reduce the aperture area could result in a decreased amount of pulse light reflected by the object and incident on the distance image sensor. The decrease in the amount of incident pulse light affects the accuracy of the distance measurement.

The present invention addressed the issue described above, and a purpose thereof is to provide a technology to suppress a decrease in measurement accuracy caused by reduction in the amount of light incident on the distance image sensor.

An imaging apparatus according to an embodiment of the present invention includes: a light source that irradiates a target object with a pulse light repeatedly; a distance image sensor that measures an incident light from the target object in synchronization with irradiation with the pulse light and generates a distance image indicating a distance to the target object by using results of multiple measurements corresponding to multiple sessions of irradiation with the pulse light; and a control unit that makes the number of times of measurements used to calculate the distance variable depending on an amount of the incident light.

Optional combinations of the aforementioned constituting elements, and mutual substitution of constituting elements and implementations of the present invention between methods, apparatuses, systems, etc. may also be practiced as additional modes of the present invention.

According to the present invention, it is possible to suppress a decrease in measurement accuracy caused by reduction in the amount of light incident on the distance image sensor.

[Fig. 1] Fig. 1 schematically shows a configuration of an imaging apparatus according to the embodiment.
[Fig. 2] Fig. 2 schematically shows the configuration of the distance image sensor 30 according to the embodiment.
[Fig. 3] Fig. 3 schematically shows the configuration of the pixel unit 38 according to the embodiment.
[Fig. 4] Fig. 4 is a timing chart showing an example of the operation of the pixel unit.
[Fig. 5] Figs. 5A-5C schematically show the operation of the distance image sensor according to the first exemplary embodiment.
[Fig. 6] Figs. 6A-6C schematically show the operation of the distance image sensor according to the second exemplary embodiment.
[Fig. 7] Figs. 7A-7C schematically show the operation of the distance image sensor according to the third exemplary embodiment.
[Fig. 8] Figs. 8A-8C schematically show the operation of the distance image sensor according to the fourth exemplary embodiment.
[Fig. 9] Figs. 9A-9C schematically show the operation of the distance image sensor according to the fifth exemplary embodiment.

DESCRIPTION OF EMBODIMENTS

A description will be given of embodiments of the present invention with reference to the drawings. Specific numerical values are shown in the embodiments by way of example only to facilitate the understanding of the invention and should not be construed as limiting the scope of the invention unless specifically indicated as such. Those elements in the drawings not directly relevant to the invention are omitted from the illustration.

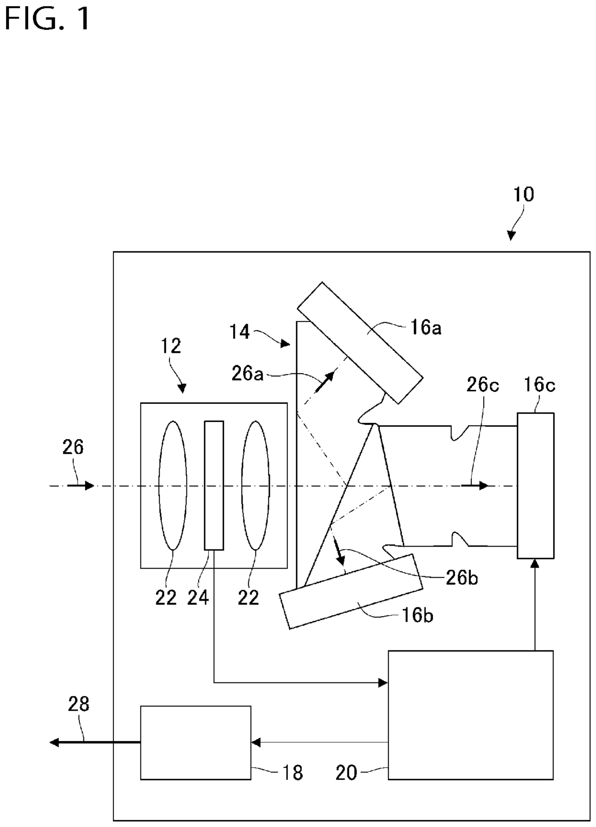

Fig. 1 schematically shows a configuration of an imaging apparatus 10 according to the embodiment. The imaging apparatus 10 is equipped with an imaging optical system 12, a light splitting element 14, multiple sensors 16a, 16b, 16c, a light source 18, and a control unit 20. The imaging apparatus 10 is a so-called three-plate camera and is configured to split an incident light 26 using the light splitting element 14 and capture an image with each of the first sensor 16a, the second sensor 16b, and the third sensor 16c.

The imaging optical system 12 forms an image of the incident light 26 from the target object on the multiple sensors 16a-16c. The incident light 26 passing through the imaging optical system 12 travels toward the light splitting element 14. The imaging optical system 12 is equipped with one or more lenses 22 and a variable aperture 24. The imaging optical system 12 may have a fixed focal length or a variable focal length. The imaging optical system 12 is, for example, equipped with multiple lenses 22 and is equipped with a zoom mechanism (not shown) for moving at least some of the multiple lenses 22 in the optical axis direction to make the focal length variable. The variable aperture 24 is, for example, placed between the front lens and the rear lens of the imaging optical system 12. The variable aperture of 24 is provided to make the aperture value or F-number of the imaging optical system 12 variable. Changing the setting value of the variable aperture 24 changes the aperture area of the variable aperture 24 through which the incident light 26 passes and changes the F-number of the imaging optical system 12. The imaging optical system 12 is, for example, equipped with a drive mechanism (not shown) for automatically or manually changing the aperture area of the variable aperture 24.

The light splitting element 14 splits the incident light 26 passing through the imaging optical system 12 and generates multiple incident light beams 26A, 26b 26C traveling toward the multiple sensors 16A-16C, respectively. The light splitting element 14 is a so-called three-plate prism.

The multiple sensors 16a-16c are image sensors for detecting the incident light 26. At least one of the multiple sensors 16a-16c is a distance image sensor that generates a distance image indicating a distance to the target object. At least one of the multiple sensors 16a-16c is an imaging sensor that generates a photographic image (e.g. a monochrome image or a color image) of the object. At least one of the multiple sensors 16a-16c may be a polarization image sensor with a polarizer provided for each pixel or a non-polarization image sensor without a polarizer. At least one of the multiple sensors 16a-16c is an event-based vision sensor (EVS; Event-based Vision Sensor) that outputs an image in which only those pixels for which a brightness change is detected are extracted.

By way of example, the first sensor 16a is an imaging sensor (or a non-polarization image sensor) that takes a color image, the second sensor 16b is a polarization image sensor that takes a polarization image, and the third sensor 16c is a distance image sensor. The type and arrangement of the multiple sensors 16a-16c are not particularly limited, and an imaging sensor of any type can be used as one of the multiple sensors 16a-16c.

The light source 18 repeatedly irradiates the target object with a pulse light 28. The light source is configured to radiate the pulse light 28 exemplified by an infrared light. The light source 18 is, for example, equipped with a laser diode array such as VCSEL (Vertical Cavity Surface Emitting Laser). The light source 18 drives the laser diode array based on a pulse signal supplied from the control unit 20 and radiates the pulse light 28 synchronized with the pulse signal.

The control unit 20 controls the overall operation of the imaging apparatus 10. The control unit 20 controls the operation of at least one of the multiple sensors 16A-16C. The control unit 20 controls the operation of the imaging sensor, which is at least one of the multiple sensors 16A-16C. The control unit 20 changes the setting value of the variable aperture 24 depending on the imaging condition of at least one of the multiple sensors 16A-16C. The control unit 20 changes the setting value of the variable aperture 24 depending on the imaging condition of the imaging sensor, which is different from the distance image sensor. The control unit 20 changes the setting value of the variable aperture 24 so that the photographic image of the target object captured by the imaging sensor has a proper imaging condition (e.g. proper exposure).

The control unit 20 controls the operation of the distance image sensor, which is at least one of the multiple sensors 16A-16C. The control unit 20 controls the operation of the distance image sensor depending on the amount of incident light from the target object. The control unit 20 controls the operation of the distance image sensor depending on the setting value of the variable aperture 24. The control unit 20 makes the number of times of measurements used to calculate the distance in the distance image sensor variable depending on the setting value of the variable aperture 24. If the aperture area of the variable aperture 24 decreases, the amount of light incident on the distance image sensor through the variable aperture 24 will decrease, and the accuracy of the distance measurement by the distance image sensor could decrease. The control unit 20 suppresses the decrease in the accuracy of distance measurement by increasing the number of times of measurements used to calculate the distance in the case the aperture area of the variable aperture 24 is small (i.e., when the F-number is large). Details of the method to make the number of times of measurements variable will be described separately later.

The control unit 20 controls the operation of the light source 18. The control unit 20 generates a pulse signal supplied to the light source 18 and causes the light source 18 to radiate the pulse light 28 synchronized with the pulse signal.

The control unit 20 can, for example, be configured by an electronic circuit such as a DSP (Digital Signal Processor) or ISP (Image Signal Processor) for executing hardware-based signal processing or image processing. The control unit 20 can be configured by one or more electronic circuits. The control unit 20 may be implemented by a combination of hardware and software. The hardware of the control unit 20 may be implemented by devices and mechanical apparatus exemplified by a processor such as a CPU (Central Processing Unit) and a GPU (Graphics Processing Unit) and by a memory such as a ROM (Read Only Memory) and a RAM (Random Access Memory). The software of the control unit 20 may be implemented by a computer program, etc. In this case, various functions provided by the control unit 20 can be implemented by cooperation of hardware and software.

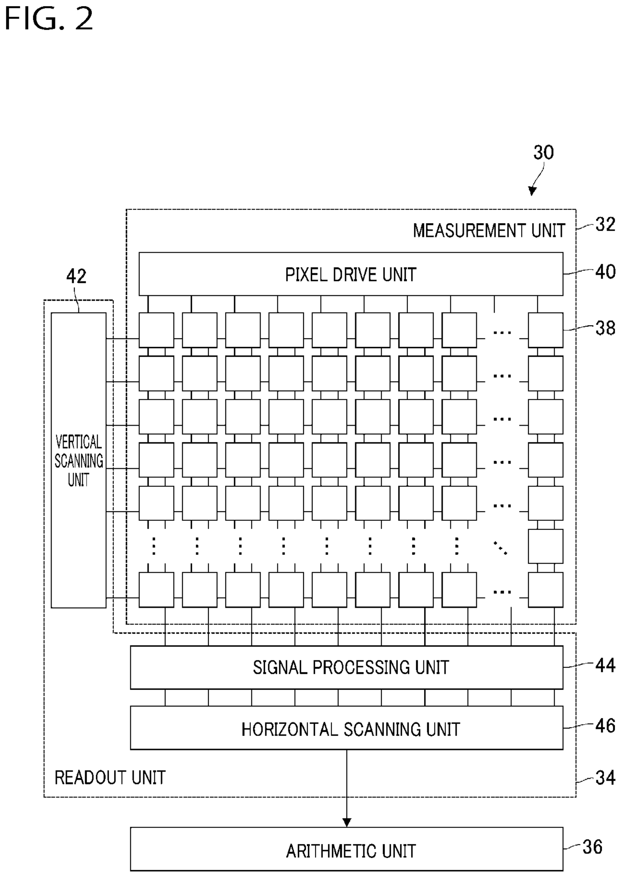

Fig. 2 schematically shows the configuration of the distance image sensor 30 according to the embodiment. The distance image sensor 30 is equipped with a measurement unit 32, a readout unit 34, and an arithmetic unit 36. The distance image sensor 30 is at least one of the multiple sensors 16a-16c shown in Fig. 1 and is configured to measure the incident light 26 passing through the variable aperture 24.

The measurement unit 32 measures the incident light 26 in synchronization with the irradiation with the pulse light 28 radiated from the light source 18. The measurement unit 32 is equipped with multiple pixel units 38 and a pixel drive unit 40. The multiple pixel units 38 are arranged in a two-dimensional array in the light-receiving region of the distance image sensor 30. The multiple pixel units 38 are configured to measure the incident light 26 incident on each pixel unit 38 and output a result of measurement. The pixel drive unit 40 drives the multiple pixel units 38 based on a control signal supplied from the control unit 20. The pixel drive unit 40 supplies a drive signal synchronized with irradiation with the pulse light 28 to the multiple pixel units 38 and causes each pixel unit 38 to execute multiple measurements corresponding to multiple sessions of irradiation with the pulse light 28.

The readout unit 34 reads out the result of measurement from the measurement unit 32 and outputs a pixel value indicating the result of measurement. The readout unit 34 operates based on a control signal supplied from the control unit 20 and reads out the result of measurement in a readout period different from a measurement period in which measurement is executed by the measurement unit 32. The readout unit 34 is equipped with a vertical scanning unit 42, a signal processing unit 44, and a horizontal scanning unit 46. The vertical scanning unit 42 generates a row selection signal for reading the results of measurement by the multiple pixel units 38 row by row. The vertical scanning unit 42 causes all results of measurement by the multiple pixel units 38 to be read out sequentially by switching the selected row sequentially. The signal processing unit 44 generates a pixel value (e.g. a digital value) from the result of measurement (e.g. an analog signal) read out from each pixel unit 38. The horizontal scanning unit 46 generates a column selection signal for outputting the pixel values generated by the signal processing unit 44 sequentially. The horizontal scanning unit 46 outputs all pixel values of the multiple pixel units 38 sequentially by switching the selected column sequentially.

The arithmetic unit 36 calculates a distance by using the pixel value read out by the readout unit 34. The arithmetic unit 36 generates a distance image indicating a distance to the target object by calculating the distance from the pixel values of the multiple pixel units 38. Details of the method of calculating the distance by using the pixel values will be described separately later.

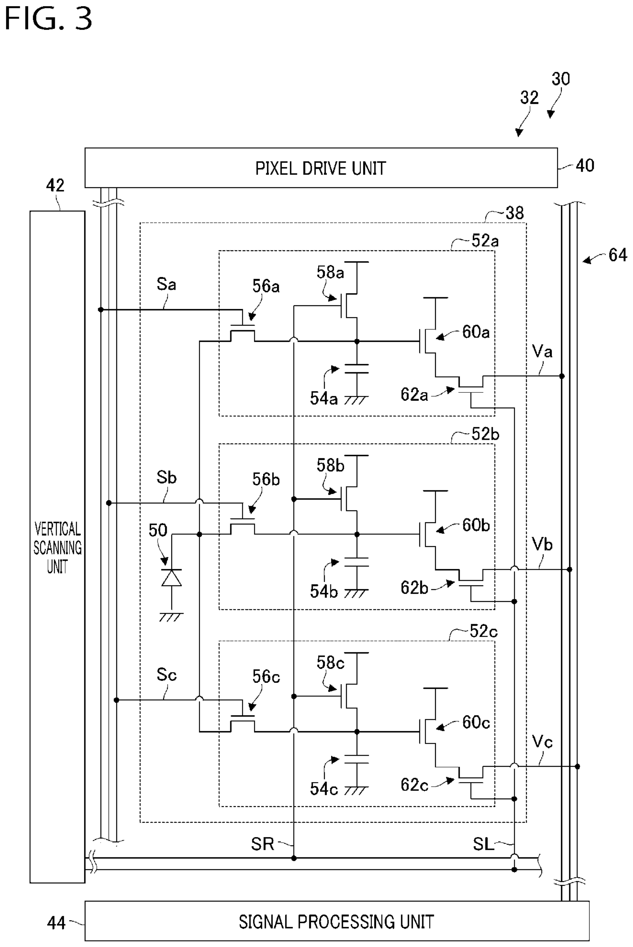

Fig. 3 schematically shows the configuration of the pixel unit 38 according to the embodiment. The pixel unit 38 is equipped with a photoelectric conversion unit 50 and multiple storage circuits 52A, 52B, 52C. In the embodiment, a case in which one pixel unit 38 is equipped with three storage circuits 52a-52c is shown. However, the number of storage circuits included in one pixel unit 38 is not limited to three but may be two, or four or more.

The photoelectric conversion unit 50 is provided in the light-receiving region where the incident light 26 is incident and generates the charge (carrier) corresponding to the light incident on the pixel unit 38. The photoelectric conversion unit 50 is, for example, a photodiode, which is exemplified by an implantable photodiode. The charge generated by the photoelectric conversion unit 50 is transferred to one of the multiple storage circuits 52A-52C and is measured.

The first storage circuit 52a is equipped with a first charge storage unit 54a, a first transfer transistor 56a, a first reset transistor 58a, a first source follower transistor 60A, and a first selection transistor 62a.

The first charge storage unit 54a is a region that stores the charge transferred from the photoelectric conversion unit 50 and is, for example, comprised of floating diffusion (FD).

The first transfer transistor 56a is provided between the photoelectric conversion unit 50 and the first charge storage unit 54a. The operation of the first transfer transistor 56a is controlled by a first drive signal Sa supplied from the pixel drive unit 40. When the first transfer transistor 56a is turned on, the charge is transferred from the photoelectric conversion unit 50 to the first charge storage unit 54a and is stored therein. When the first transfer transistor 56a is turned off, the photoelectric conversion unit 50 and the first charge storage unit 54a are disconnected, preventing the charge from being transferred.

The first reset transistor 58a resets the charge stored in the first charge storage unit 54a. The operation of the first reset transistor 58a is controlled by a reset signal SR supplied from the vertical scanning unit 42. When the first reset transistor 58a is turned on, the charge stored in the first charge storage unit 54a is discharged outside. When the first reset transistor 58a is turned off, the charge stored in the first charge storage unit 54a is not discharged outside, and the charge stored in the first charge storage unit 54a is maintained.

The first source follower transistor 60a outputs a voltage value determined by a first charge amount Qa stored in the first charge storage unit 54a. The first selection transistor 62a is provided between the first source follower transistor 60a and a vertical signal line 64. The operation of the first selection transistor 62a is controlled by a row selection signal SL supplied from the vertical scanning unit 42. When the first selection transistor 62a is turned on, a first voltage value Va determined by the first charge amount Qa stored in the first charge storage unit 54a is output to the vertical signal line 64. When the first selection transistor 62A is turned off, the first source follower transistor 60A and the vertical signal line 64 are disconnected.

The second storage circuit 52b is configured in the same way as the first storage circuit 52a. The second storage circuit 52b is equipped with a second charge storage unit 54b, a second transfer transistor 56b, a second reset transistor 58b, a second source follower transistor 60b, and a second selection transistor 62b.

The operation of the second transfer transistor 56b is controlled by a second drive signal Sb supplied from the pixel drive unit 40. When the second transfer transistor 56b is turned on, the charge is transferred from the photoelectric conversion unit 50 to the second charge storage unit 54b and is stored therein. The operation of the second reset transistor 58b is controlled by a reset signal SR supplied from the vertical scanning unit 42. When the second reset transistor 58b is turned on, the charge stored in the second charge storage unit 54b is discharged outside. The operation of the second selection transistor 62b is controlled by a row selection signal SL supplied from the vertical scanning unit 42. When the second selection transistor 62b is turned on, a second voltage value Vb determined by a second charge amount Qb stored in the second charge storage unit 54b is output to the vertical signal line 64.

The third storage circuit 52c is configured in the same manner as the first storage circuit 52a and the second storage circuit 52b. The third storage circuit 52c is equipped with a third charge storage unit 54c, a third transfer transistor 56c, a third reset transistor 58c, a third source follower transistor 60c, and a third selection transistor 62c.

The operation of the third transfer transistor 56c is controlled by a third drive signal Sc supplied from the pixel drive unit 40. When the third transfer transistor 56c is turned on, the charge is transferred from the photoelectric conversion unit 50 to the third charge storage unit 54c and is stored therein. The operation of the third reset transistor 58c is controlled by a reset signal SR supplied from the vertical scanning unit 42. When the third reset transistor 58c is turned on, the charge stored in the third charge storage unit 54c is discharged outside. The operation of the third selection transistor 62c is controlled by a row selection signal SL supplied from the vertical scanning unit 42. When the third selection transistor 62c is turned on, a third voltage value Vc determined by a third charge amount Qc stored in the third charge storage unit 54c is output to the vertical signal line 64.

The signal processing unit 44 generates three pixel values Pa, Pb, Pc from the three voltage values Va-Vc output to the vertical signal line 64. The signal processing unit 44 generates the three pixel values Pa-Pc by, for example, sample-and-holding each of the three voltage values Va-Vc and subjecting the values to A/D conversion. The three pixel values Pa-PC generated by the signal processing unit 44 correspond to the charge amounts Qa-Qc respectively stored in the three storage circuits 52a-52c and indicate the results of measurement in the pixel unit 38.

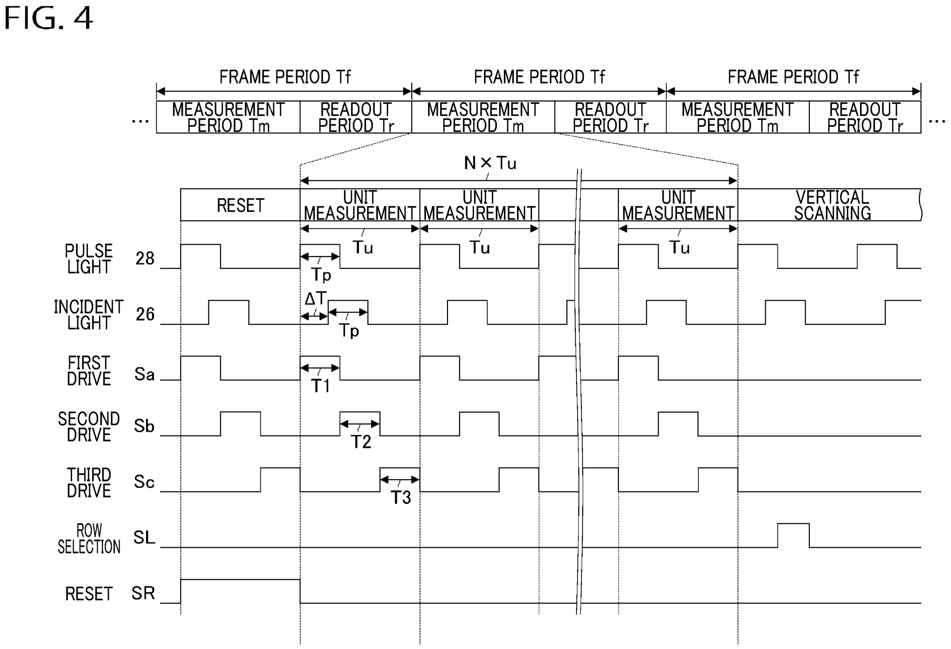

Fig. 4 is a timing chart showing an example of the operation of the pixel unit 38. The pixel unit 38 operates with a predetermined frame period Tf as a repeating unit. One frame period Tf includes a measurement period Tm and a readout period Tr. The measurement period Tm is a period in which the charge generated by the photoelectric conversion unit 50 is transferred (or distributed) to multiple storage circuits 52a-52c and is stored. The readout period Tr is a period in which the charge amounts Qa-Qc stored in the multiple storage circuits 52a-52c, respectively, are read out as the voltage values Va-Vc.

In the measurement period Tm, the pulse light 28 is repeatedly radiated at a predetermined period Tu, and a single measurement (also known as a unit measurement) is executed in synchronization with a single session of irradiation with the pulse light 28. The period of unit measurement is the same as a period of irradiation with the pulse light 28. A unit measurement includes a first storage period T1, in which the first drive signal Sa is turned on and the charge is stored in the first charge storage unit 54a, a second storage period T2, in which the second drive signal Sb is turned on and the charge is stored in the second charge storage unit 54b, and a third storage period T3, in which the third drive signal Sc is turned on and the charge is stored in the third charge storage unit 54c. The length of each storage period T1-T3 is the same as a pulse width Tp in which the pulse light 28 is radiated. Thus, the period Tu of a single unit measurement is three times the pulse width Tp of the pulse light 28 (i.e., Tu=3×Tp).

The pulse light 28 is reflected by the target object and is then incident on the photoelectric conversion unit 50. The incident light 26 includes a pulse component Ip, which corresponds to the reflected light of the pulse light 28, and a background light component Io other than the pulse light 28. The pulse component Ip is incident on the photoelectric conversion unit 50 at a point of time when a delay time ∆T corresponding to the round-trip distance to the target object has elapsed. The point of time of incidence of the pulse component Ip coincides with at least one of the first storage period T1 or the second storage period T2. Thus, the charge generated in the photoelectric conversion unit 50 due to the incidence of the pulse component Ip is transferred to at least one of the first charge storage unit 54a or the second charge storage unit 54b, and the distribution ratio of the charge changes depending on the delay time ∆T. The third storage period T3 is a point of time when the pulse component Ip is not incident and only the background light component Io is incident. Therefore, the charge generated in the photoelectric conversion unit 50 due to the background light component Io is transferred to the third charge storage unit 54c.

The first charge storage unit 54a stores the charge generated in the photoelectric conversion unit 50 in the first storage period T1. The charge amount Q1 generated in the photoelectric conversion unit 50 in the first storage period T1 is given by Q1=Ip•(Tp-∆T)+Io•Tp. The second charge storage unit 54b stores the charge generated in the photoelectric conversion unit 50 in the second storage period T2. The charge amount Q2 generated in the photoelectric conversion unit 50 in the second storage period T2 is given by Q2=Ip•ΔT+Io•Tp. The third charge storage unit 54c stores the charge generated in the photoelectric conversion unit 50 in the third storage period T3. The charge amount Q3 generated in the photoelectric conversion unit 50 in the third storage period T3 is given by Q3=Io•Tp. The delay time ΔT determined by the distance to the target object can be calculated from these charge amounts Q1-Q3 and is given by

$$\Delta T = Tp(Q2-Q3)/(Q1+Q2-2\times Q3).$$

The charge amounts Q1-Q3 generated in a single unit measurement are very small. Therefore, the delay time ΔT is calculated by using the charge amounts Qa-Qc stored by repeatedly executing multiple (e.g. N times) measurements. The charge amounts Qa-Qc respectively stored in the multiple charge storage units 54a-54c in N measurements are given by Qa=N×Q1, Qb=N×Q2, Qc=N×Q3, assuming that the measurement conditions remain unchanged. Therefore, the delay time ΔT is given by ΔT=Tp(Qb-Qc)/(Qa+Qb-2×Qc) by using the charge amounts Qa-Qc stored in the multiple charge storage units 54a-54c. In this case, the length of the measurement period Tm is N times the period Tu of a single unit measurement (i.e., Tm=N×Tu).

In the readout period Tr, the results of measurement are read out sequentially from the multiple pixel units 38. In the readout period Tr, the drive signals Sa-Sc for transferring the charge from the photoelectric conversion unit 50 to the multiple storage circuits 52a-52c are all turned off so that the charge transfer is stopped. The charge amounts Qa-Qc respectively stored in the multiple storage circuits 52a-52c in the measurement period Tm are maintained until they are read out as the voltage values Va-Vc in the readout period Tr. The result of measurement by the pixel unit 38 is output to the vertical signal line 64 at a point of time when the row selection signal SL supplied from the vertical scanning unit 42 is turned on. By switching the readout row of the multiple pixel units 38 sequentially, the results of measurement by all pixel units 38 are output sequentially to the vertical signal line 64. By turning on the reset signal SR at the end of the readout period Tr, the charge stored in each of the multiple storage circuits 52a-52c is discharged, and the charge amounts Qa-Qc are reset. After the reset is completed, the measurement period Tm in the next frame period Tf starts.

In the example shown in Fig. 4, the pulse light 28 is repeatedly radiated at the predetermined period Tu even in the readout period Tr. Thus, the control unit 20 supplies a pulsed signal for radiating the pulse light 28 to the light source 18 in both the measurement period Tm and the readout period Tr. It is not necessary to radiate the pulse light 28 in the readout period Tr, and the pulse light 28 may be stopped in the readout period Tr. In this case, the control unit 20 may supply a pulse signal for radiating the pulse light 28 to the light source 18 in the measurement period Tm and stop the supply of the pulse signal in the readout period Tr.

A description will now be given of exemplary embodiments in which the number of times of unit measurements used to calculate the distance is made variable depending on the setting value of the variable aperture 24. Instead of the setting value of the variable aperture 24, the number of times of unit measurements used to calculate the distance may be made variable depending on the amount of incident light from the target object. For example, the number of times of unit measurements used to calculate the distance may be made variable depending on the amount of incident light incident on the distance image sensor 30. The number of times of unit measurements used to calculate the distance may be made variable depending on the amount of incident light incident on the image sensor (e.g. imaging sensor) different from the distance image sensor 30.

In the following exemplary embodiments, a description will be given of cases in which the setting value of the variable aperture 24 is "1", "2" or "3". In the following exemplary embodiment, the F-number of the imaging optical system 12 is "1.4" when the setting value of the variable aperture 24 is "1", the F-number of the imaging optical system 12 is "2.0" when the setting value of the variable aperture 24 is "2", and the F-number of the imaging optical system 12 is "2.8" when the setting value of the variable aperture 24 is "3". Therefore, increasing the setting value of the variable aperture 24 increases the F-number of the imaging optical system 12 and decreases the aperture area of the variable aperture 24 through which the incident light 26 passes. Specifically, the aperture area of the variable aperture 24 is reduced to half when the setting value of the variable aperture 24 is increased by one step.

(First exemplary embodiment)

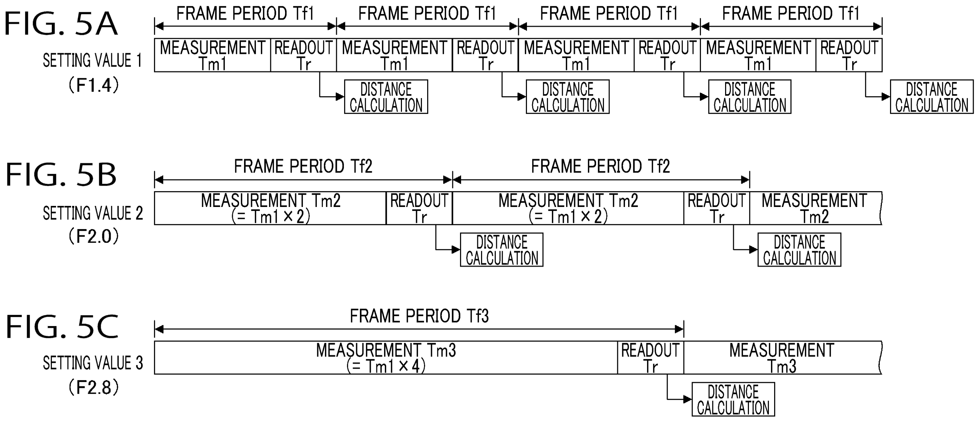

Figs. 5A-5C schematically show the operation of the distance image sensor 30 according to the first exemplary embodiment. Fig. 5A shows a case in which the setting value of the variable aperture 24 is "1". The first frame period Tf1 shown in Fig. 5A includes a first measurement period Tm1 and a readout period Tr. The first measurement period Tm1 is a period for repeatedly executing N (e.g. 500) unit measurements. The readout period Tr is a period for reading out pixel values from all pixel units 38. The distance image sensor 30 can calculate a distance from the pixel value at each of the first frame period Tf1 and generate a distance image.

Fig. 5B shows a case in which the setting value of the variable aperture 24 is "2". The aperture area of the variable aperture 24 in the case the setting value is "2" is 1/2 of the aperture area S of the variable aperture 24 in the case the setting value is "1", and the incident light amount of the pulse component Ip is also 1/2. The second frame period Tf2 shown in Fig. 5B includes a second measurement period Tm2 and a readout period Tr. The second measurement period Tm2 is a period for repeatedly executing N×2 (e.g. 1,000 times) unit measurements. The number times of unit measurements executed in the second measurement period Tm is twice the number of times of unit measurements executed in the first measurement period Tm1. The readout period Tr is a period for reading out pixel values from all of the multiple pixel units 38 and is the same as that of case in which the setting value is "1". The distance image sensor 30 can calculate the distance from the pixel value at each of the second frame period Tf2 and generate a distance image.

Fig. 5C shows a case in which the setting value of the variable aperture 24 is "3". The aperture area of the variable aperture 24 in the case the setting value is "3" is 1/4 of the aperture area S of the variable aperture 24 in the case the setting value is "1", and the incident light amount of the pulse component Ip is also 1/4. The third frame period Tf3 shown in Fig. 5C includes a third measurement period Tm3 and a readout period Tr. The third measurement period Tm3 is a period for repeatedly executing N×4 (e.g. 2,000 times) unit measurements. The number of times of unit measurements executed in the third measurement period Tm is four times the number of times of unit measurements executed in the first measurement period Tm1. The readout period Tr is a period for reading out pixel values from all of the multiple pixel units 38 and is the same as that of case in which the setting value is "1". The distance image sensor 30 can calculate the distance from the pixel value at each of the third frame period Tf3 and generate a distance image.

According to the first exemplary embodiment, the number of times of unit measurements included in the measurement period is changed so that the aperture area (S/k) corresponding to the setting value of the variable aperture 24 and the number of times of (N×k) unit measurements within a single frame period are inversely proportional.

In other words, the number of times of measurements used to calculate the distance is changed depending on the setting value of the variable aperture 24 so that the product of the aperture area (S/k) of the variable aperture 24 and the number of times of (N×k) unit measurements is a constant value (S1×N).

The control unit 20 determines the number of times of measurements depending on the setting value of the variable aperture 24 and controls the operation of the distance image sensor 30 so that the pixel value is read out after the measurement is executed a number of times determined. The control unit 20 can determine the number of times of measurements depending on the setting value of the variable aperture 24 by using a table or a formula stored in advance. The distance image sensor 30 uses the results of variable, multiple measurements executed within a single frame period to calculate the distance to the target object for each pixel and generate a distance image.

In the first exemplary embodiment, the length of the measurement period is variable depending on the setting value of the variable aperture 24 so that the readout period of the pixel value is variable. Further, the length of the frame period varies depending on the setting value of the variable aperture 24 so that the generation period of the distance image is also variable. Therefore, the control unit 20 according to the first exemplary embodiment makes the number of times of measurements used to calculate the distance depending on the setting value of the variable aperture 24 variable, thereby making the readout period of the pixel value variable and the generation period of the distance image variable.

(Second exemplary embodiment)

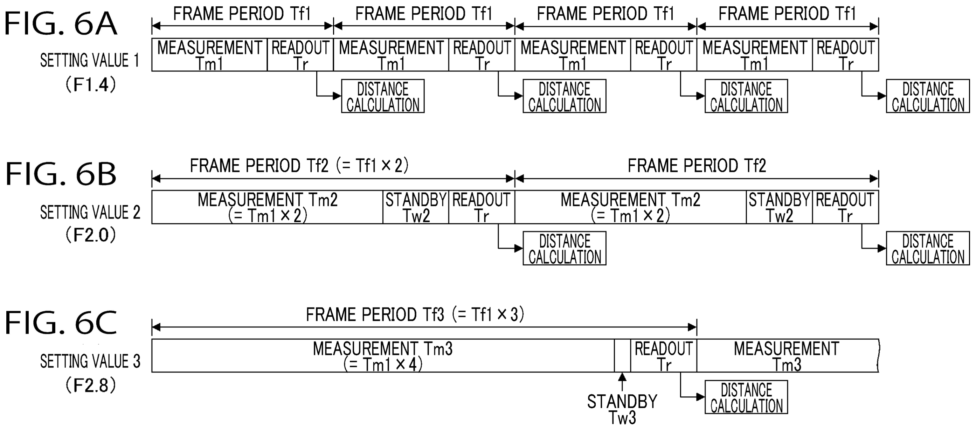

Fig. 6A-6C schematically show the operation of the distance image sensor 30 according to the second exemplary embodiment. The second exemplary embodiment differs from the first exemplary embodiment described above in that the length of the frame period, which is variable depending on the setting value of the variable aperture 24, is an integer multiple of a reference period.

Fig. 6A shows a case in which the setting value of the variable aperture 24 is "1". Fig. 6A is the same as Fig. 5A described above. In the examples shown in Figs. 6A-6C, the length of the first frame period Tf1 is the reference period.

Fig. 6B shows a case in which the setting value of the variable aperture 24 is "2". Fig. 6B differs from Fig. 5B described above in that a standby period Tw2 is introduced between the second measurement period Tm2 and the readout period Tr. The standby period Tw2 is a period in which measurement is not executed and is a period in which the transfer of charge from the photoelectric conversion unit 50 to the multiple storage circuits 52a-52c is not executed. In the standby period Tw2, the drive signals Sa-Sc for charge transfer remain turned off, and the row selection signal SL and the reset signal SR also remain turned off. In the readout period Tr after the end of the standby period Tw2, therefore, the amount of charge stored in the multiple storage circuits 52a-52c is read out in the second measurement period Tm2. Therefore, the second frame period Tf2 includes a second measurement period Tm2, a standby period Tw2, and a readout period Tr. The length of the standby period Tw2 can be defined so that that the second frame period Tf2 is an integer multiple of (e.g. twice) the reference period.

Fig. 6C shows a case in which the setting value of the variable aperture 24 is "3". Fig. 6C differs from Fig. 5C described above in that a standby period Tw3 is introduced between the third measurement period Tm3 and the readout period Tr. The standby period Tw3, like the standby period Tw2, is a period in which measurement is not executed and a period in which the transfer of charge from the photoelectric conversion unit 50 to the multiple storage circuits 52a-52c is not executed. In the readout period Tr after the end of the standby period Tw3, the amount of charge stored in the multiple storage circuits 52a-52c is read out in the third measurement period Tm3. Therefore, the third frame period Tf3 includes a measurement period Tm3, a standby period Tw3, and a readout period Tr. The length of the standby period Tw3 is determined so that the third frame period Tf3 is an integer multiple of (e.g. three times) the reference period.

In the second exemplary embodiment, too, the number of times of unit measurements included in the measurement period is changed so that the aperture area (S/k) corresponding to the setting value of the variable aperture 24 and the number of times of (N×k) unit measurements within a single frame period are inversely proportional. In the second exemplary embodiment, the frame period is determined to be an integer multiple of the reference period by introducing a standby period between the measurement period and the readout period. As a result, the distance image can be generated at a generation period that is an integer multiple of the reference period.

The control unit 20 determines the number of times of measurements depending on the setting value of the variable aperture 24 and also determines the length of the standby period so that the frame period is an integer multiple of the reference period. The control unit 20 controls the operation of the distance image sensor 30 so that the pixel value is read out after an elapse of the determined standby period since the measurement is executed a determined number of times. The control unit 20 can determine the number of times of measurements and the length of the standby period depending on the setting value of the variable aperture 24 by using a table or a formula stored in advance. The distance image sensor 30 uses the results of variable, multiple measurements executed within a single frame period to calculate the distance to the target object for each pixel and generate a distance image.

In the second exemplary embodiment, too, the length of the measurement period is variable depending on the setting value of the variable aperture 24 so that the readout period of the pixel value is variable. In the second exemplary embodiment, too, the length of the frame period is variable depending on the setting value of the variable aperture 24 so that the generation period of the distance image is also variable. Therefore, the control unit 20 according to the second exemplary embodiment makes the number of times of measurements used to calculate the distance depending on the setting value of the variable aperture 24 variable, thereby making the readout period of the pixel value variable and the generation period of the distance image variable.

In the second exemplary embodiment, the frame period is determined to be an integer multiple of the reference period so that the readout period of the pixel value is an integer multiple of the reference period, and the generation period of the distance image is also an integer multiple of the reference period. As a result, the timing to read the pixel value can be shared in common, and the timing to generate the distance image can also be shared in common regardless of the setting value of the variable aperture 24.

(Third exemplary embodiment)

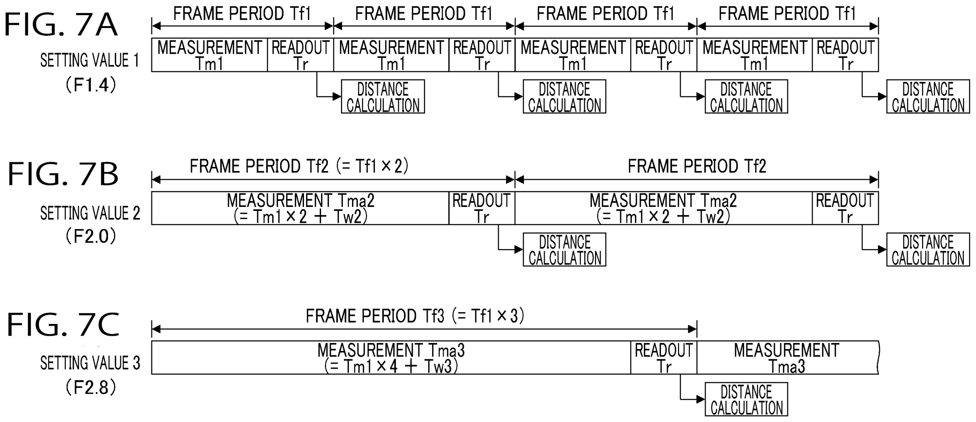

Fig. 7A-7C schematically show the operation of the distance image sensor 30 according to the third exemplary embodiment. The third exemplary embodiment is similar to the second exemplary embodiment described above in that the length of the frame period, which is variable depending on the setting value of the variable aperture 24, is an integer multiple of a reference period. The third exemplary embodiment differs from the second exemplary embodiment described above in that the measurement period is extended instead of providing a standby period.

Fig. 7A shows a case in which the setting value of the variable aperture 24 is "1". Fig. 7A is the same as Fig. 5A and Fig. 6A described above. In the examples shown in Fig. 7A-7C, the length of the first frame period Tf1 is the reference period.

Fig. 7B shows a case in which the setting value of the variable aperture 24 is "2". Fig. 7B shows a larger length of the second measurement period Tma2 compared to that of Fig. 5B and Fig. 6B. The length of the second measurement period Tma2 corresponds to the sum of the second measurement period Tm2 and the standby period Tw2 of Fig. 6B. Therefore, the number of times of unit measurements executed in the second measurement period Tma2 is more than twice (e.g. 1,300 times) the number of times N of unit measurements executed in the first measurement period Tm1 (e.g. 500 times). The second frame period Tf2 includes a second measurement period Tma2 and a readout period Tr and does not include a standby period Tw2. The length of the second measurement period Tma2 can be determined so that the measurement can be executed a number of times equal to or more than the number of times (N×2) determined by the setting value of the variable aperture 24, and the second frame period Tf2 is an integer multiple of (e.g. twice) the reference period.

Fig. 7C shows a case in which the setting value of the variable aperture 24 is "3". Fig. 7C shows a larger length of the third measurement period Tma3 compared to that of Fig. 5B and Fig. 6B. The length of the third measurement period Tma3 corresponds to the sum of the third measurement period Tm3 and the standby period Tw3 in Fig. 6B. Therefore, the number of times of unit measurements executed in the third measurement period Tma3 is more than four times (e.g. 2,100 times) the number of times N (e.g. 500) of unit measurements executed in the first measurement period Tm1. The third frame period Tf3 includes a third measurement period Tma3 and a readout period Tr and does not include a standby period Tw3. The length of the third measurement period Tma3 can be determined so that the measurement can be executed a number of times equal to or more than the number of times (N×4) determined by the setting value of the variable aperture 24, and the third frame period Tf3 is an integer multiple of (e.g. three times) the reference period.

In the third exemplary embodiment, the number of times of measurements is changed depending on the setting value of the variable aperture 24 so that the product of the aperture area (S/k) of the variable aperture 24 and the number of times of (N×k) unit measurements is equal to or larger than a constant value (S1×N). In the third exemplary embodiment, the frame period is determined to be an integer multiple of the reference period by extending the measurement period. As a result, the distance image can be generated at a generation period that is an integer multiple of the reference period.

The control unit 20 determines, for example, the number of times (lower-limit number of times) of measurements depending on the setting value of the variable aperture 24 and determines the number of times of measurements for adjustment (additional number of times) so that the frame period is an integer multiple of the reference period. The control unit 20 determines the sum of the lower-limit number of times and the additional number of times to be the number of times of measurements in the measurement period. The control unit 20 controls the operation of the distance image sensor 30 so that the pixel value is read out after the measurement is executed a total number of times thus determined. The control unit 20 can determine the lower-limit number of times and the additional number of times by using a table or a formula stored in advance. The control unit 20 may use a table or a formula stored in advance to determine the total number of times, and it is not necessary to determine lower-limit number of times and the additional number of times. The distance image sensor 30 uses the results of variable, multiple measurements executed within a single frame period to calculate the distance to the target object for each pixel and generate a distance image.

In the third embodiment, too, the length of the measurement period is variable depending on the setting value of the variable aperture 24 so that the readout period of the pixel value is variable. In the third exemplary embodiment, too, the length of the frame period is variable depending on the setting value of the variable aperture 24 so that the generation period of the distance image is also variable. Therefore, the control unit 20 according to the third exemplary embodiment makes the number of times of measurements used to calculate the distance depending on the setting value of the variable aperture 24 variable, thereby making the readout period of the pixel value variable and the generation period of the distance image variable.

In the third exemplary embodiment, too, the frame period is determined to be an integer multiple of the reference period so that the readout period of the pixel value is an integer multiple of the reference period. The generation period of the distance image is also an integer multiple of the reference period. As a result, the timing to read the pixel value can be shared in common, and the timing to generate the distance image can also be shared in common regardless of the setting value of the variable aperture 24.

In the third embodiment, the measurement period is extended instead of introducing a standby period so that the distance can be calculated by using the results of the measurement executed a number of times equal to or larger than the number of times of measurements in the second exemplary embodiment. According to the third embodiment, consequently, a decrease in measurement accuracy can be suppressed more suitably than in the second exemplary embodiment.

(Fourth exemplary embodiment)

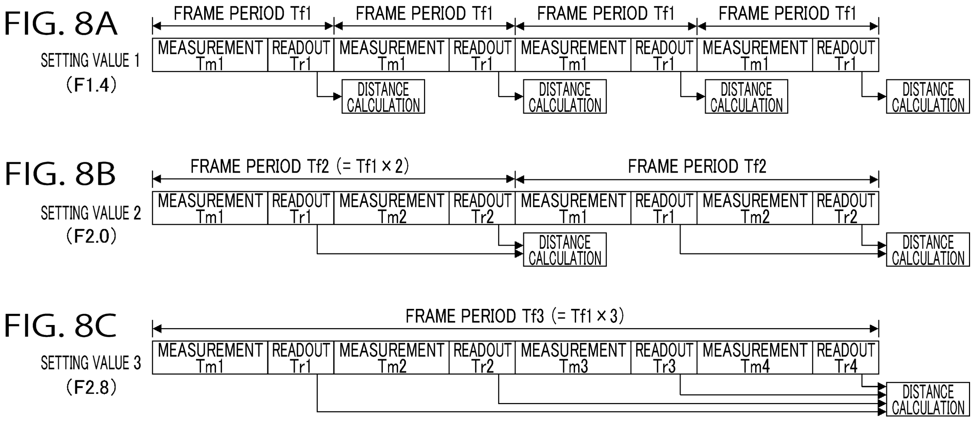

Figs. 8A-8C schematically show the operation of the distance image sensor 30 according to the fourth exemplary embodiment. In the fourth exemplary embodiment, the distance is calculated by using multiple pixel values read out at different points of time depending on the setting value of the variable aperture 24. In the fourth embodiment, the operation of the pixel unit 38 is not changed depending on the setting value of the variable aperture 24, and the operation of the pixel unit 38 is shared in common. In the fourth embodiment, the readout period in which the pixel value is read out from the pixel unit 38 is constant.

Fig. 8A shows a case in which the setting value of the variable aperture 24 is "1". Fig. 8A is the same as Fig. 5A, Fig. 6A, and Fig. 7A described above. The first frame period Tf1 includes a first measurement period Tm1 and a first readout period Tr1. The first measurement period Tm1 is a period for repeatedly executing N (e.g. 500) unit measurements. The arithmetic unit 36 calculates the distance by using the pixel value indicating the results of N unit measurements executed in the first measurement period Tm. In this case, the generation period of the distance image is the same as the readout period of the pixel value.

Fig. 8B shows a case in which the setting value of the variable aperture 24 is "2". The second frame period Tf2 includes a first measurement period Tm1, a first readout period Tr1, a second measurement period Tm2, and a second readout period Tr2. The first measurement period Tm1 and the second measurement period Tm2 are the same as the first measurement period Tm1 of Fig. 8A and is a period for repeatedly executing N (e.g. 500 times) unit measurements. The first readout period Tr1 and the second readout period Tr2 are the same as the first readout period Tr1 of Fig. 8A. The arithmetic unit 36 calculates the distance by using the pixel value read out in the first readout period Tr1 and the pixel value read out in the second readout period Tr2. The arithmetic unit 36 calculates the distance by using the two pixel values that are read out at different points of time. The arithmetic unit 36 adds the pixel value read out in the first readout period Tr1 and the pixel value read out in the second readout period Tr2 and calculates the distance by using the sum. The sum indicates the results of N×2 unit measurements executed in the two measurement periods Tm1, Tm2. Therefore, the arithmetic unit 36 calculates the distance by using the results of N×2 measurements. In this case, the generation period of the distance image is twice the readout period of the pixel value.

Fig. 8C shows a case in which the setting value of the variable aperture 24 is "3". The third frame period Tf3 includes a first measurement period Tm1, a first readout period Tr1, a second measurement period Tm2, a second readout period Tr2, a third measurement period Tm3, a third readout period Tr3, a fourth measurement time Tm4, and a fourth readout period Tr4. The measurement periods Tm1-Tm4 are the same as the first measurement period Tm1 of Fig. 8A and is a period for repeatedly executing N (e.g. 500 times) unit measurements. The readout periods Tr1-Tr4 are the same as the first readout period Tr1 of Fig. 8A. The arithmetic unit 36 calculates the distance by using the pixel value read out in the first readout period Tr1, the pixel value read out in the second readout period Tr2, the pixel value read out in the third readout period Tr3, and the pixel value read out in the fourth readout period Tr4. The arithmetic unit 36 calculates the distance by using the four pixel values that are read out at different points of time. The arithmetic unit 36 adds the pixel value read out in the four readout periods Tr1-Tr4 and calculates the distance by using the sum. The sum indicates the results of N×4 unit measurements executed in the four measurement periods Tm1-Tm4. Therefore, the arithmetic unit 36 calculates the distance by using the results of N×4 measurements. In this case, the generation period of the distance image is four times the readout period of the pixel value.

In the fourth exemplary embodiment, too, the number of times of measurements used to calculate the distance is changed so that the aperture area (S/k) corresponding to the setting value of the variable aperture 24 and the number of times of (N×k) unit measurements within a single frame period are inversely proportional. In the fourth embodiment, the number of pixel values used to calculate the distance is changed instead of changing the length of the measurement period.

The control unit 20 determines the number of times of measurements and determines the number of pixel values used to calculate the distance depending on the setting value of the variable aperture 24. The control unit 20 can determine the number of times of measurements and the number of pixel values depending on the setting value of the variable aperture 24 by using a table or a formula stored in advance. The control unit 20 may determine only the number of pixel values by using a table or a formula stored in advance and may not determine the number of times of measurement. The control unit 20 controls the operation of the distance image sensor 30 so that the distance is calculated by using the number of pixel values determined. The arithmetic unit 36 can be equipped with a storage unit that temporarily stores the pixel value read out in the readout period and can calculate the distance by using one or multiple pixel values stored in the storage unit. The distance image sensor 30 uses the results of multiple measurements executed within a single frame period to calculate the distance to the target object for each pixel and generate a distance image.

In the fourth exemplary embodiment, the length of the measurement period and the readout period is fixed so that the readout period of the pixel value is constant. As a result, the operation of the pixel unit 38 can be shared in common regardless of the setting value of the variable aperture 24. In the fourth embodiment, the distance is calculated by using the number of pixels that is variable depending on the setting value of the variable aperture 24 so that the generation period of the distance image is variable depending on the setting value of the variable aperture 24. Therefore, the control unit 20 depending on the fifth exemplary embodiment makes the number of times of measurements used to calculate the distance variable and makes the generation period of the distance image variable depending on the setting value of the variable aperture 24 but does not make the readout period of the pixel value variable.

(Fifth exemplary embodiment)

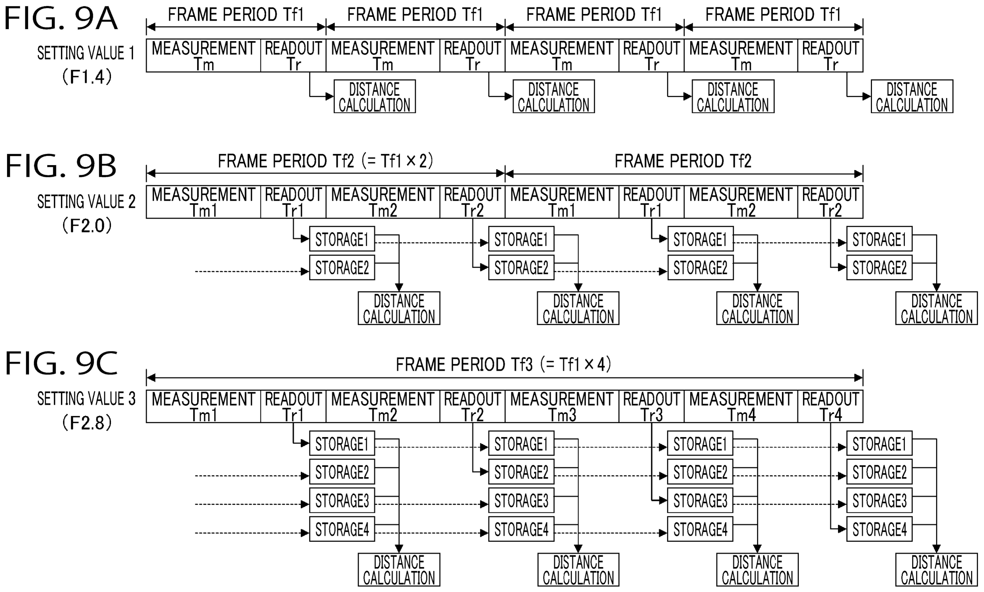

Fig. 9A-9C schematically show the operation of the distance image sensor 30 according to the fifth exemplary embodiment. In the fifth exemplary embodiment, as in the fourth exemplary embodiment, the distance is calculated by using multiple pixel values read out at different points of time depending on the setting value of the variable aperture 24. The fifth exemplary embodiment differs from the fourth exemplary embodiment in that the generation period of the distance image is not changed depending on the setting value of the variable aperture 24, and the generation period of the distance image is constant.

Fig. 9A shows a case in which the setting value of the variable aperture 24 is "1". Fig. 9A is the same as Fig. 8A described above.

Fig. 9B shows a case in which the setting value of the variable aperture 24 is "2". The operation of the pixel unit 38 in the second frame period Tf2 is the same as that of Fig. 8B described above. The arithmetic unit 36 is equipped with a first storage unit that stores the pixel value read out in the first readout period Tr1 and a second storage unit that stores the pixel value read out in the second readout period Tr2. The pixel value stored in the first memory is updated by the pixel value read out in the first readout period Tr1 but is not updated by the pixel value read out in the second readout period Tr2 so that the previous value is maintained. The pixel value stored in the second storage unit is updated by the pixel value read out in the second readout period Tr2 but is not updated by the pixel value read out in the first readout period Tr1 so that the previous value is maintained. The arithmetic unit 36 calculates the distance by using the two pixel values stored in the first storage unit and the second storage unit. For example, the arithmetic unit 36 calculates the distance by using the sum of the two pixel values. The arithmetic unit 36 generates a distance image at a point of time when the pixel value of one of the first storage unit or the second unit is updated. Therefore, the generation period of the distance image is the same as the readout period of the pixel value.

Fig. 9C shows a case in which the setting value of the variable aperture 24 is "3". The operation of the pixel unit 38 in the third frame period Tf3 is the same as that of Fig. 8C described above. The arithmetic unit 36 is equipped with a first storage unit that stores the pixel value read out in the first readout period Tr1, a second storage unit that stores the pixel value read out in the second readout period Tr2, a third storage unit that stores the pixel value read out in the third readout period Tr3, and a fourth storage unit that stores the pixel value read out in the fourth readout period Tr4. The pixel value stored in the first storage unit is updated by the pixel value read out in the first readout period Tr1 but is not updated by the pixel value read out in the other readout periods Tr2-Tr4 so that the previous value is maintained. The pixel value stored in the second storage unit is updated by the pixel value read out in the second readout period Tr2 but is not updated by the pixel value read out in the other readout periods Tr1, Tr3, Tr4 so that the previous value is maintained. The pixel value stored in the third storage unit is updated by the pixel value read out in the third readout period Tr3 but is not updated by the pixel value read out in the other readout periods Tr1, Tr2, Tr4 so that the previous value is maintained. The pixel value stored in the fourth storage unit is updated by the pixel value read out in the fourth readout period Tr4 but is not updated by the pixel value read out in the other readout periods Tr1-Tr3 so that the previous value is maintained. The arithmetic unit 36 calculates the distance by using the four pixel values stored in the first storage unit through the fourth storage unit. For example, the arithmetic unit 36 calculates the distance by using the sum of the four pixel values. The arithmetic unit 36 generates a distance image at a point of time when the pixel value of one of the multiple storage units is updated. Therefore, the generation period of the distance image is the same as the readout period of the pixel value.

In the fifth exemplary embodiment, too, the number of times of measurements used to calculate the distance is changed so that the aperture area (S/k) corresponding to the setting value of the variable aperture 24 and the number of times of (N×k) unit measurements within a single frame period are inversely proportional. In the fifth embodiment, as in the fourth exemplary embodiment, the number of pixel values used to calculate the distance is changed instead of changing the length of the measurement period. In the fifth exemplary embodiment, the length of the frame period for sequentially storing as many pixel values as used to calculate the distance.

The control unit 20 determines the number of times of measurements depending on the setting value of the variable aperture 24 and determines the number of pixel values used to calculate the distance. The control unit 20 can determine the number of times of measurements or the number of pixels depending on the setting value of the variable aperture 24 by using a table or a formula stored in advance. The control unit 20 controls the operation of the distance image sensor 30 so that the distance is calculated by using the number of pixel values determined. The arithmetic unit 36 can be equipped with a storage unit that temporarily stores the pixel value read out in the readout period and can calculate the distance by using one or multiple pixel values stored in the storage unit. The distance image sensor 30 uses the results of multiple measurements executed within a single frame period to calculate the distance to the target object for each pixel and generate a distance image.

In the fifth exemplary embodiment, the length of the measurement period and the readout period is fixed so that the readout period of the pixel value is constant. As a result, the operation of the pixel unit 38 can be shared in common regardless of the setting value of the variable aperture 24. In the fifth embodiment, the distance image is generated in response to an update to one of the multiple pixel values used to calculate the distance. Therefore, the generation period of the distance image is not changed depending on the setting value of the variable aperture 24, and the generation period of the distance image is constant. Therefore, the control unit 20 according to the fifth exemplary embodiment makes the number of times of measurements used to calculate the distance variable depending on the setting value of the variable aperture 24 variable but does not make the readout period of the pixel value variable or make the generation period of the distance image variable.

In the exemplary embodiments described above, an example is shown of a case of three setting values of the variable aperture 24. In this embodiment, the number of setting values of the variable aperture 24 is not particularly limited. There may be two setting values or four or more setting values. In addition, the setting values of the variable aperture 24 may be set incrementally, discretely, or continuously.

In the embodiment described above, a case is shown in which the incident light 26 is split by using the light splitting element 14 and is caused to be incident on the multiple sensors 16a-16c. An alternative embodiment may be configured such that the imaging apparatus 10 is not equipped with a light splitting element 14, and the incident light 26 passing through the imaging optical system 12 is incident only on a single distance image sensor. In this case, the setting value of the variable aperture 24 may be changed depending on the imaging condition of the distance image sensor. For example, the depth of focus of the imaging optical system 12 may be changed and the range of distance to the object that can be measured by the distance image sensor may be changed by changing the setting value of the variable aperture 24.

The invention has been explained with reference to the embodiments described above, but the invention is not limited to the embodiments described above, and appropriate combinations or replacements of the features shown in the examples presented are also encompassed by the present invention.

It should be understood that, although the generation period of the distance image is variable in the first-fourth exemplary embodiments, the generation period of the distance image at different aperture values can be aligned by introducing an appropriate new standby period. Specifically, the generation period of a distance image at a certain aperture value can be aligned with the generation period of a distance image at another aperture value that allows a smaller amount of light by introducing a new standby time. Aligning the generation period of distance images in this way provides an advantage of simplifying the design of the system in the later stage that acquires the distance images. Aligning with a generation period of an aperture value that allows the least amount of light or a longer particular generation period can align the generation period of the distance image of all aperture values. In a certain variation of the first-fourth exemplary embodiments described above, the readout period of the pixel value and the generation period of the distance image may be fixed regardless of the setting value of the variable aperture of 24. In this case, it may be ensured that the sum of the measurement period, standby period, and readout period may be constant by making the length of the measurement period variable and making the length of the standby period since the end of the measurement period until the beginning of the readout period variable depending on the setting value of the variable aperture 24.

INDUSTRIAL APPLICABILITY

According to the present invention, it is possible to suppress a decrease in measurement accuracy in the case a variable aperture is applied to a distance image sensor.

REFERENCE SIGNS LIST

10 ... imaging apparatus, 14 ... light splitting element, 18 ... light source, 20 ... control unit, 24 ... variable aperture, 26 ... incident light, 28 ... pulse light, 30 ... distance image sensor, 32 ... measurement unit, 34 ... readout unit, 36 ... arithmetic unit, 38 ... pixel unit, 40 ... pixel drive unit, 42 ... vertical scanning unit, 44 ... signal processing unit, 46 ... horizontal scanning unit, 50 ... photoelectric conversion unit, 52a-52c ... storage circuit

**Claims**

1.  An imaging apparatus comprising:

    a light source that irradiates a target object with a pulse light repeatedly;
    a distance image sensor that measures an incident light from the target object in synchronization with irradiation with the pulse light and generates a distance image indicating a distance to the target object by using results of multiple measurements corresponding to multiple sessions of irradiation with the pulse light; and
    a control unit that makes the number of times of measurements used to calculate the distance variable depending on an amount of the incident light.

2.  The imaging apparatus according to Claim 1, wherein the control unit makes a generation period of the distance image variable depending on the amount of the incident light.

3.  The imaging apparatus according to Claim 1, wherein the distance image sensor comprises:

    a pixel unit that measures the incident light in synchronization with irradiation with the pulse light;
    a readout unit that reads out a pixel value indicating a result of measurement from the pixel unit; and
    an arithmetic unit that calculates the distance by using the pixel value,
    wherein the control unit makes a readout period at which the readout unit reads out the pixel value variable depending on the amount of the incident light.

4.  The imaging apparatus according to claim 1, wherein the distance image sensor comprises:

    a pixel unit that measures the incident light in synchronization with irradiation with the pulse light;
    a readout unit that reads out a pixel value indicating a result of measurement from the pixel unit; and
    an arithmetic unit that calculates the distance by using the pixel value,
    wherein the arithmetic unit is adapted to calculate the distance by using multiple pixel values read out by the readout unit at different points of time, and
wherein the control unit makes the number of pixel values used to calculate the distance variable depending on the amount of the incident light.

5. The imaging apparatus according to any one of claims 1 through 4, further comprising:

a light splitting element that splits the incident light into a first incident light traveling toward the distance image sensor and a second incident light; and
an imaging sensor that detects the second incident light and generates a photographic image of the target object,
wherein the control unit makes the number of times of measurements used to calculate the distance variable depending on an amount of the second incident light.

6. The imaging apparatus according to any one of claims 1 through 5, further comprising:

a variable aperture that a light from the target object passes through,
wherein the control unit makes the number of times of measurements variable depending on a setting value of the variable aperture.

## FIG. 1

# FIG. 2

30

MEASUREMENT UNIT — 32

PIXEL DRIVE UNIT — 40

42

— 38

VERTICAL SCANNING UNIT

SIGNAL PROCESSING UNIT — 44

HORIZONTAL SCANNING UNIT — 46

READOUT UNIT — 34

ARITHMETIC UNIT — 36

# FIG. 3

FIG. 4

EP 4 745 621 A1

# FIG. 5A

SETTING VALUE 1 (F1.4)

FRAME PERIOD Tf1 | FRAME PERIOD Tf1 | FRAME PERIOD Tf1 | FRAME PERIOD Tf1

MEASUREMENT Tm1 | READOUT Tr | MEASUREMENT Tm1 | READOUT Tr | MEASUREMENT Tm1 | READOUT Tr | MEASUREMENT Tm1 | READOUT Tr

DISTANCE CALCULATION (×4)

# FIG. 5B

SETTING VALUE 2 (F2.0)

FRAME PERIOD Tf2 | FRAME PERIOD Tf2

MEASUREMENT Tm2 (= Tm1 × 2) | READOUT Tr | MEASUREMENT Tm2 (= Tm1 × 2) | READOUT Tr

DISTANCE CALCULATION

# FIG. 5C

SETTING VALUE 3 (F2.8)

FRAME PERIOD Tf3

MEASUREMENT Tm3 (= Tm1 × 4) | READOUT Tr

DISTANCE CALCULATION

EP 4 745 621 A1

FIG. 6A

SETTING VALUE 1
(F1.4)

| ← FRAME PERIOD Tf1 → | ← FRAME PERIOD Tf1 → | ← FRAME PERIOD Tf1 → | ← FRAME PERIOD Tf1 → |
|---|---|---|---|

| MEASUREMENT Tm1 | READOUT Tr | MEASUREMENT Tm1 | READOUT Tr | MEASUREMENT Tm1 | READOUT Tr | MEASUREMENT Tm1 | READOUT Tr |

DISTANCE CALCULATION     DISTANCE CALCULATION     DISTANCE CALCULATION     DISTANCE CALCULATION

FIG. 6B

SETTING VALUE 2
(F2.0)

| ← FRAME PERIOD Tf2 (= Tf1 × 2) → | ← FRAME PERIOD Tf2 → |
|---|---|

| MEASUREMENT Tm2 (= Tm1 × 2) | STANDBY Tw2 | READOUT Tr | MEASUREMENT Tm2 (= Tm1 × 2) | STANDBY Tw2 | READOUT Tr |

DISTANCE CALCULATION     DISTANCE CALCULATION

FIG. 6C

SETTING VALUE 3
(F2.8)

| ← FRAME PERIOD Tf3 (= Tf1 × 3) → |
|---|

| MEASUREMENT Tm3 (= Tm1 × 4) | READOUT Tr | MEASUREMENT Tm3 |

STANDBY Tw3

DISTANCE CALCULATION

**FIG. 7A**

SETTING VALUE 1
（F1.4）

| FRAME PERIOD Tf1 | FRAME PERIOD Tf1 | FRAME PERIOD Tf1 | FRAME PERIOD Tf1 |
|---|---|---|---|

| MEASUREMENT Tm1 | READOUT Tr | MEASUREMENT Tm1 | READOUT Tr | MEASUREMENT Tm1 | READOUT Tr | MEASUREMENT Tm1 | READOUT Tr |
|---|---|---|---|---|---|---|---|

DISTANCE CALCULATION   DISTANCE CALCULATION   DISTANCE CALCULATION   DISTANCE CALCULATION

**FIG. 7B**

SETTING VALUE 2
（F2.0）

| FRAME PERIOD Tf2 (= Tf1 × 2) | FRAME PERIOD Tf2 |
|---|---|

| MEASUREMENT Tma2 (= Tm1 × 2 + Tw2) | READOUT Tr | MEASUREMENT Tma2 (= Tm1 × 2 + Tw2) | READOUT Tr |
|---|---|---|---|

DISTANCE CALCULATION   DISTANCE CALCULATION

**FIG. 7C**

SETTING VALUE 3
（F2.8）

| FRAME PERIOD Tf3 (= Tf1 × 3) |
|---|

| MEASUREMENT Tma3 (= Tm1 × 4 + Tw3) | READOUT Tr | MEASUREMENT Tma3 |
|---|---|---|

DISTANCE CALCULATION

FIG. 8A

SETTING VALUE 1
（F1.4）

| FRAME PERIOD Tf1 | | FRAME PERIOD Tf1 | | FRAME PERIOD Tf1 | | FRAME PERIOD Tf1 | |
|---|---|---|---|---|---|---|---|
| MEASUREMENT Tm1 | READOUT Tr1 | MEASUREMENT Tm1 | READOUT Tr1 | MEASUREMENT Tm1 | READOUT Tr1 | MEASUREMENT Tm1 | READOUT Tr1 |

DISTANCE CALCULATION

DISTANCE CALCULATION

DISTANCE CALCULATION

DISTANCE CALCULATION

FIG. 8B

SETTING VALUE 2
（F2.0）

| FRAME PERIOD Tf2 (= Tf1 × 2) | | | | FRAME PERIOD Tf2 | | | |
|---|---|---|---|---|---|---|---|
| MEASUREMENT Tm1 | READOUT Tr1 | MEASUREMENT Tm2 | READOUT Tr2 | MEASUREMENT Tm1 | READOUT Tr1 | MEASUREMENT Tm2 | READOUT Tr2 |

DISTANCE CALCULATION

DISTANCE CALCULATION

FIG. 8C

SETTING VALUE 3
（F2.8）

| FRAME PERIOD Tf3 (= Tf1 × 3) | | | | | | | |
|---|---|---|---|---|---|---|---|
| MEASUREMENT Tm1 | READOUT Tr1 | MEASUREMENT Tm2 | READOUT Tr2 | MEASUREMENT Tm3 | READOUT Tr3 | MEASUREMENT Tm4 | READOUT Tr4 |

DISTANCE CALCULATION

# FIG. 9A

SETTING VALUE 1 (F1.4)

| FRAME PERIOD Tf1 | FRAME PERIOD Tf1 | FRAME PERIOD Tf1 | FRAME PERIOD Tf1 |
|---|---|---|---|

| MEASUREMENT Tm | READOUT Tr | MEASUREMENT Tm | READOUT Tr | MEASUREMENT Tm | READOUT Tr | MEASUREMENT Tm | READOUT Tr |

DISTANCE CALCULATION    DISTANCE CALCULATION    DISTANCE CALCULATION    DISTANCE CALCULATION

# FIG. 9B

SETTING VALUE 2 (F2.0)

| FRAME PERIOD Tf2 (= Tf1 × 2) | FRAME PERIOD Tf2 |
|---|---|

| MEASUREMENT Tm1 | READOUT Tr1 | MEASUREMENT Tm2 | READOUT Tr2 | MEASUREMENT Tm1 | READOUT Tr1 | MEASUREMENT Tm2 | READOUT Tr2 |

STORAGE1 STORAGE1 STORAGE1 STORAGE1
STORAGE2 STORAGE2 STORAGE2 STORAGE2

DISTANCE CALCULATION    DISTANCE CALCULATION    DISTANCE CALCULATION    DISTANCE CALCULATION

# FIG. 9C

SETTING VALUE 3 (F2.8)

| FRAME PERIOD Tf3 (= Tf1 × 4) |
|---|

| MEASUREMENT Tm1 | READOUT Tr1 | MEASUREMENT Tm2 | READOUT Tr2 | MEASUREMENT Tm3 | READOUT Tr3 | MEASUREMENT Tm4 | READOUT Tr4 |

STORAGE1 STORAGE1 STORAGE1 STORAGE1
STORAGE2 STORAGE2 STORAGE2 STORAGE2
STORAGE3 STORAGE3 STORAGE3 STORAGE3
STORAGE4 STORAGE4 STORAGE4 STORAGE4

DISTANCE CALCULATION    DISTANCE CALCULATION    DISTANCE CALCULATION    DISTANCE CALCULATION

EP 4 745 621 A1

## INTERNATIONAL SEARCH REPORT

| | International application No. |
|---|---|
| | **PCT/JP2024/024178** |

**A. CLASSIFICATION OF SUBJECT MATTER**

*G01S 7/4861*(2020.01)i; *G01S 17/894*(2020.01)i
FI:    G01S7/4861; G01S17/894

According to International Patent Classification (IPC) or to both national classification and IPC

**B. FIELDS SEARCHED**

Minimum documentation searched (classification system followed by classification symbols)

G01S7/48-7/51; G01S17/00-17/95; G01C3/00-3/32; G01B11/00-11/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/208214 A1 (MURATA MANUFACTURING CO., LTD.) 29 December 2016 (2016-12-29)<br>claims, paragraphs [0035]-[0100], fig. 1-12 | 1-4 |
| Y | | 5-6 |
| Y | JP 2008-128792 A (FUJIFILM CORPORATION) 05 June 2008 (2008-06-05)<br>claims, fig. 1, 5, 9 | 5 |
| Y | JP 2017-032391 A (DENSO CORPORATION) 09 February 2017 (2017-02-09)<br>claims, paragraphs [0009]-[0035], fig. 1 | 5 |
| Y | JP 2011-064498 A (HONDA MOTOR CO., LTD.) 31 March 2011 (2011-03-31)<br>paragraphs [0020]-[0074], fig. 1-8 | 6 |
| Y | JP 2012-107957 A (NIKON CORPORATION) 07 June 2012 (2012-06-07)<br>paragraph [0082] | 6 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 July 2024** | **06 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/024178** |

### C. DOCUMENTS CONSIDERED TO BE RELEVANT

| Category* | Citation of document, with indication, where appropriate, of the relevant passages | Relevant to claim No. |
| --- | --- | --- |
| X | WO 2014/207983 A1 (PANASONIC INTELLECTUAL PROPERTY MANAGEMENT CO., LTD.) 31 December 2014 (2014-12-31) claims, paragraphs [0014]-[0026], fig. 1-5 | 1 |
| A | JP 2002-369049 A (PENTAX CORPORATION) 20 December 2002 (2002-12-20) entire text, all drawings | 6 |
| A | JP 2000-002518 A (MINOLTA CO., LTD.) 07 January 2000 (2000-01-07) entire text, all drawings | 6 |

Form PCT/ISA/210 (second sheet) (July 2022)

## INTERNATIONAL SEARCH REPORT
### Information on patent family members

International application No.

**PCT/JP2024/024178**

| Patent document cited in search report | | | Publication date (day/month/year) | Patent family member(s) | | | Publication date (day/month/year) |
|---|---|---|---|---|---|---|---|
| WO | 2016/208214 | A1 | 29 December 2016 | US 2018/0045513 A1 claims, paragraphs [0055]-[0120], fig. 1-12 CN 107533136 A | | | |
| JP | 2008-128792 | A | 05 June 2008 | (Family: none) | | | |
| JP | 2017-032391 | A | 09 February 2017 | (Family: none) | | | |
| JP | 2011-064498 | A | 31 March 2011 | US 2012/0177252 A1 paragraphs [0026]-[0091], fig. 1-8 WO 2011/033971 A1 | | | |
| JP | 2012-107957 | A | 07 June 2012 | (Family: none) | | | |
| WO | 2014/207983 | A1 | 31 December 2014 | US 2016/0178734 A1 claims, paragraphs [0029]-[0039], fig. 1-5 EP 3015882 A1 | | | |
| JP | 2002-369049 | A | 20 December 2002 | US 2002/0186976 A1 entire text, all drawings | | | |
| JP | 2000-002518 | A | 07 January 2000 | US 6268918 B1 entire text, all drawings | | | |

Form PCT/ISA/210 (patent family annex) (July 2022)

**EP 4 745 621 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004294420 A